# EUROPEAN PATENT SPECIFICATION

(11) **EP 2 618 601 B1**
(45) Date of publication and mention of the grant of the patent: **24.09.2014**
(21) Application number: 12360002.5
(22) Date of filing: 17.01.2012
(51) Int. Cl.: H04W 24/02

(54) **Identifying coverage gaps**
Identifizierung von Sendegebietslücken
Identification de lacunes en matière de couverture

(43) Date of publication of application: 24.07.2013
(73) Proprietor: ALCATEL LUCENT, 92100 Boulogne-Billancourt (FR); UNIVERSITY COLLEGE DUBLIN, Dublin 4 (IE)
(72) Inventor: Ho, Lester, Swindon Wiltshire, SN5 5GD (GB); Hemberg, Erik, Dublin (IE)
(74) Representative: Sarup, David Alexander

(56) References cited:
- EP-A1- 2 037 707
- EP-A1- 2 139 277
- WO-A1-2010/040417
- US-A1- 2008 101 302
- US-A1- 2010 330 921

## Description

### FIELD OF THE INVENTION

The present invention relates to a method, a computer program product and a network node.

### BACKGROUND

In a cellular wireless telecommunications network, radio coverage is provided by areas knows as cells. A base station is located in each cell to provide the radio coverage area. Traditional base stations provide coverage in relatively large geographical areas and these cells are often referred to as macro cells. It is possible to provide smaller sized cells, often within a macro cell. Such smaller sized cells are sometimes referred to as micro cells, pico cells or femto cells. Such small cells are typically established by providing a small cell base station that provides radio coverage having a relatively limited range within the radio coverage area of a macro cell. The transmission power of the small cell base station is relatively low and, hence, each small cell provides a smaller coverage area compared to that of a macro cell and covers, for example, an office or a home. A group of such small cell base stations may together provide a wireless small cell network.

Such small cells are typically provided where the communications coverage provided by the macro cell is poor or where a user wishes to use an alternative communications link provided locally, by the small cell base station, to communicate with the core network. Such a situation might arise where, for example, a user has a pre-existing communications link and the user wishes to utilise that link in preference to that provided by the macro cell network provider to communicate with the core network.

The group of small cell base stations providing the wireless small cell network can together provide extended local coverage to use equipment throughout, for example, a home or an office building by using multiple small cell base stations distributed throughout those buildings which enables each of those base stations to transmit at a lower power than would otherwise be necessary if coverage was to be provided by a single small cell base station.

When deploying such small cell networks, it has been found that it is difficult to determine the presence of any coverage gaps between the small cells within the small cell network.

WO 2010/040417 discloses a method for providing a confidence estimation of coverage hole detection. Techniques are provided for determining when a terminal has no access whatsoever to a radio access network.

Accordingly, it is desired to provide an improved technique for identifying coverage gaps between small cells.

### SUMMARY

According to a first aspect, there is provided a method as claimed in claim 1.

The first aspect recognises that a problem with small cell networks is the detection of coverage gaps between the small cells. The small cell network is a collection of small cells that are deployed to provide continuous cellular coverage. When such a small cell network is deployed, optimisation of the transmission power of each small cell needs to be performed to ensure that the network functions as efficiently as possible. One of the most important aspects that need to be considered during this optimisation is the presence of coverage gaps between the small cells. In order to autominously perform an optimisation of the coverage in order to minimise coverage gaps, the small cell network needs to be able to determine whether coverage gaps exist within the small cell network. Typically, in order to autonomously determine the existence of coverage gaps autonomous measurements are taken. One technique that is used is the estimation of the path lost between small cells. In this technique, a small cell base station measures the received power from neighbouring small cells (either through a sniffer or through measurement reports provided by user equipment) and, using shared knowledge of what the neighbouring transmission powers are, estimates the radio propogation path loss between itself and its neighbours. It is then possible to set the transmission power to a level that, using the derived path loss, would provide a certain overlap with its neighbours. However, this technique suffers from the problem that it relies on the estimation of radio propogation path loss, which may not be accurate. It also does not take into account areas of a building where coverage is not required because it is not an area where users are usually present. Another technique is to measure the number of mobility events (such as handovers or relocations) between the small cell network and the overlying macro cell (referred to as inter-layer mobility events), if this is high then it is likely that user equipment is experiencing a coverage gap between neighbouring femto cells. However, this technique suffers from the problem that small cells covering busy areas where users are highly mobile are reported more often than small cells in less busy areas or where users are more static. Also, small cells at the edge of the small cell network (for example ones placed at the entrance to a building) would be identified as having more inter-layer mobility events. The most accurate technique for determining coverage gaps is to manually perform a site survey, using measuring equipment. However, this technique, apart from being costly, is only practical when configuring the coverage manually and is not very useful when a dynamic coverage optimisation algorithm is to be used.

Accordingly, a method is provided of identifying coverage gaps between small cells of a wireless telecommunications network. At least one coverage gap event is identified using a time elapsed between inter-layer mobility events between the small cells and the overlying cell. The first aspect recognises that by taking into account the amount of time spent outside the coverage of the small cell group it is possible to better distinguish between coverage gaps and periods when user equipment has left the small cell network. Also, the amount of time elapsed may provide an indication of the extent of the coverage gap. This information can then be used to better optimise the coverage provided by the small cells.

In one embodiment, the identifying comprises identifying each coverage gap event by measuring the time elapsed between an exit inter-layer mobility event of the user equipment between an exit small cell of the group of small cells and the overlying cell and an entry inter-layer mobility event of user equipment between the overlying cell and an entry small cell of the group of small cells. Accordingly, the time elapsed between the user equipment exiting the coverage of the small cell group and subsequently re-entering the coverage of the small cell group may be identified. It will be appreciated that this requires relatively little processing and re-uses information that will already be available.

In one embodiment, the method comprises associating an indication of the time elapsed with the coverage gap event. By associating the time elapsed, it is possible to subsequently analyse this information to better understand whether a coverage gap exists or not, as well as its likely size.

In one embodiment, the method comprises associating with the coverage gap event an indication of at least one of an entry small cell base station supporting the entry small cell and an indication of an exit small cell base station supporting the exit small cell. Accordingly, the coverage gap event may be associated with an indication of the entry small cell base station and/or an indication of the exit small cell base station.

Again, this enables the information to be subsequently analysed to determine between which small cells coverage gaps appear to exist.

In one embodiment, the method comprises collating coverage gap events into a set of the coverage gap events. Accordingly, the events may be collated together to provide a statistically significant set of events for subsequent analysis.

In one embodiment, the method comprises disregarding from the set of the coverage gap events those coverage gap events having greater than a predetermined time elapsed. Accordingly, those coverage events which are determined to be too long and therefore unlikely to relate to a coverage gap may be disregarded so that only those events which are considered to relate to coverage gaps are retained for subsequent use when optimising the coverage of the small cells. This helps to avoid the problem of increasing the coverage area of small cells provided at the entrances to buildings since the elapsed time in those circumstances is likely to be greater than the predetermined time. It will be appreciated that the predetermined time elapsed may be pre-set to a particular amount such as, for example, less than a number of minutes.

In one embodiment, the predetermined time elapsed is a statistical function of the time elapsed associated with each coverage gap event. Accordingly, it is possible to refine the predetermined time elapsed based on the coverage gap events occurring within the small cell network. This helps to better distinguish between coverage gaps and periods when the user equipment has intentionally left the coverage area of the small cell network.

In one embodiment, the method comprises disregarding from the set of coverage gap events those coverage gap events for which the indication of the entry small cell base station matches the indication of the exit small cell base station. Small cells located at the entrances to buildings are more likely to experience inter-layer mobility events due to the user equipment exiting the building and then subsequently re-entering the building at a later time. Accordingly, those coverage gap events which identify the same base station as the entry and exit base station are more likely to be located at the entrance of a building.

In one embodiment, the method comprises collating disregarded coverage gap events into a set of disregarded coverage gap events. By collating the disregarded events, it is possible to build a set of disregarded events which can be used to help identify small cells which ought not to be subject to coverage optimisation since they are likely to be located at the entrances to buildings.

In one embodiment, the method comprises identifying those small cell base stations identified most often in the set of disregarded coverage gap events as being guard small cell base stations of the group of small cell base stations. Those base stations identified most commonly in the set of disregarded events are more likely to be located at the entrances to buildings and this information can be used by a coverage optimising algorithm.

In one embodiment, the method comprises providing an indication of the guard small cell base stations to a coverage gap optimiser.

In one embodiment, the method comprises providing an indication of a coverage gap between two small cells to a coverage gap optimiser based on a statistical function of the time elapsed associated with each coverage gap event between the two small cells. Using the coverage gap events it is possible to perform statistical analysis on the time lapsed for each coverage event between pairs of small cells. For example, it is possible to derive a set of coverage events between any two small cells and to determine an average time elapsed for the set of coverage events, which provides an indication of the size of the coverage gap between those two small cells. This indication of the size of the coverage gap may then be provided to a coverage optimising algorithm.

According to a second aspect, there is provided a computer program product operable, when executed on a computer to perform the method of the first aspect.

According to a third aspect, there is provided a network node as claimed in claim 14.

In one embodiment, the identifying logic is operable to identify each coverage gap event by measuring the time elapsed between an exit inter-layer mobility event of the user equipment between an entry small cell of the group of small cells and the overlying cell and an entry inter-layer mobility event of user equipment between the overlying cell and an entry small cell of the group of small cells.

In one embodiment, the identifying logic is operable to associate an indication of the time elapsed with the coverage gap event.

In one embodiment, the identifying logic is operable to associate with the coverage gap event an indication of at least one of an entry small cell base station supporting the entry small cell and an indication of an exit small cell base station supporting the exit small cell.

In one embodiment, the identifying logic is operable to collate coverage gap events into a set of the coverage gap events.

In one embodiment, the identifying logic is operable to disregard from the set of the coverage gap events those coverage gap events having greater than a predetermined time elapsed.

In one embodiment, the predetermined time elapsed is a statistical function of the time elapsed associated with each coverage gap event.

In one embodiment, the identifying logic is operable to disregard from the set of coverage gap events those coverage gap events for which the indication of the entry small cell base station matches the indication of the exit small cell base station.

In one embodiment, the identifying logic is operable to collate disregarded coverage gap events into a set of disregarded coverage gap events.

In one embodiment, the identifying logic is operable to identify those small cell base stations identified most often in the set of disregarded coverage gap events as being guard small cell base stations of the group of small cell base stations.

In one embodiment, the identifying logic is operable to provide an indication of the guard small cell base stations to a coverage gap optimiser.

In one embodiment, the identifying logic is operable to provide an indication of a coverage gap between two small cells to a coverage gap optimiser based on a statistical function of the time elapsed associated with each coverage gap event between the two small cells.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically the main components of a telecommunications network according to one embodiment;
Figure 2 illustrates schematically a general deployment within one macro cell shown in Figure 1;
Figure 3 illustrates an example environment of a group of small cell base stations within a building; and
Figure 4 illustrates a flowchart showing the main processing steps performed to gather information to help identify the presence of coverage gaps.

### DESCRIPTION OF THE EMBODIMENTS

### Overview

Embodiments provide a technique for detecting coverage gaps between small cells supported by a small cell base station group that takes into account the amount of time a user spends outside the coverage area provided by the small cell base station group.

A record is maintained of when user equipment enters and leaves the coverage area provided by the small cell base station group. The record indicates when the user equipment moves out of the coverage area provided by the small cell base station group and performs an inter-layer mobility procedure (where the user equipment relocates from a small cell supported by the small cell base station group to an overlying cell supported by, for example, a macro base station). The record also indicates when the user equipment moves back into the coverage area provided by the group of small cell base stations and performs an inter-layer mobility procedure (where the user equipment relocates from the overlying cell to a small cell supported by one of the group of small cell base stations).

By taking into account how long the user equipment is outside the coverage area provided by the group of small cell base stations, it is possible to determine if a coverage gap exists between small cells because the time period between a user exiting and re-entering the small cell base station coverage area provides indication of the nature of the coverage gap. For example, if the period is very short, then the coverage gap may lie in an area where the user equipment is mobile and/or where the loss in small cell service is temporary (for example due to lack of coverage in a cell). If the period is very long, then this may indicate either that the coverage gap is in an area where users spend a lot of time (for example in an office cubicle) or that the user has left the small cell base station coverage area provided by the group of small cell base stations completely. In particular, if user equipment exits the coverage area provided by the small cell base stations and does not return after a predetermined amount of time (for example six hours), then this event may be considered not to be caused by a coverage gap and may be disregarded.

It is possible to record the small cell base stations which were involved in the inter-layer mobility events. Those small cell base stations which are recorded more frequently may be more likely to be base stations at an entrance or exit of a building housing the group of small cell base stations. In particular, those occurrences where the same small cell base station was involved in an inter-layer mobility event for user equipment exiting the group of small cell base stations and was then also involved in the subsequent inter-layer mobility event for user equipment re-entering the group of small cell base stations, are most likely to indicate that the user equipment left the coverage area provided by the small cell base stations rather than being a coverage gap.

This information can be used to perform coverage and power optimization to optimize any coverage gaps, but also may be used to facilitate load balancing, to prevent leakage outside any buildings and to reduce interference. It will be appreciated that this information can then be used with any optimization technique to prioritize coverage in different areas. For example, a lack of coverage in office cubicles means that users are left without small cell service for extended periods of time and priority may be given to reduce the occurrence of such lack of coverage. Additionally, if there is an unacceptably high amount of mobility-related signalling, then the coverage gaps in, for example, corridors that are causing this can be identified and given a higher priority for their reduction in the optimization algorithm.

Any mobility events between small cell base stations within the group can be ignored since these intra-layer mobility events only occur where there are no coverage gaps between those small cell base stations. It is only when an inter-layer mobility event occurs, when the user equipment relocates away from the group of small cell base stations, that is it likely that a coverage gap exists. It will be appreciated that the exact amount of time between inter-layer mobility events due to a coverage gap will vary based on the speed of the user equipment.

Generally, inter-layer mobility events occurring within a few seconds of each other are normally indicative of a coverage gap, whereas periods of many tens of minutes or more are likely to be indicative of the user equipment having temporarily left the coverage area provided by the group of small cell base stations. It is possible to perform some statistical analysis of the recorded time periods to automatically derive appropriate thresholds below which it is assumed that a coverage gap exists.

### Wireless Telecommunications Network Overview

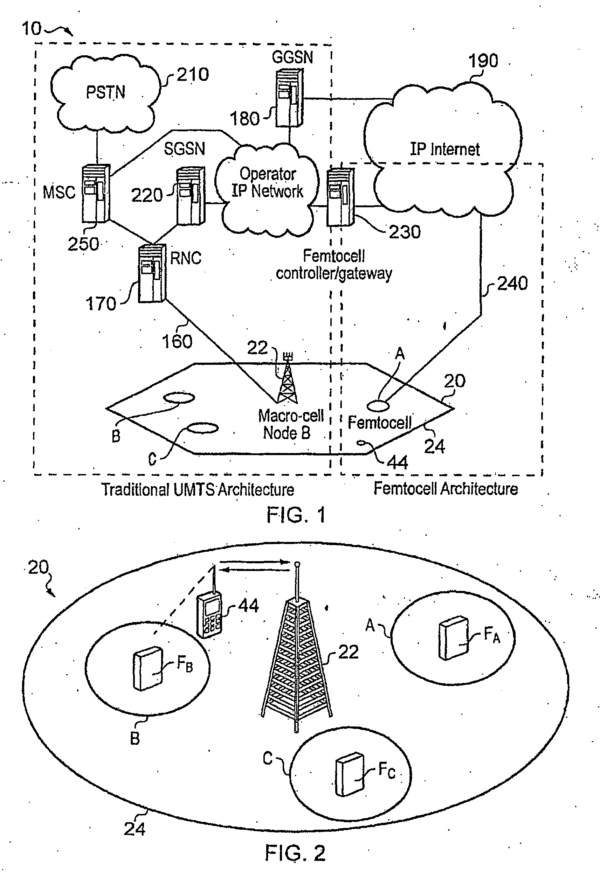

Figure 1 illustrates a wireless communication network, generally 10, according to one embodiment. User equipment 44 roam through the wireless communication network 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors. Typically, a different antenna within a base station supports an associated sector. Of course, it will be appreciated that Figure 1 illustrates a small subset of the total number of user equipment and base stations that may be present in a typical communications network.

The wireless communication network 10 is managed by a radio network controller 170. The radio network controller 170 controls the operation of the wireless communications network 10 by communicating with the base stations 22 over a backhaul communications link 160. The network controller 170 also communicates with the user equipment 44 via their respective radio links in order to efficiently manage the wireless communication network 10.

The radio network controller 170 maintains a neighbour list which includes information about the geographical relationship between cells supported by base stations. In addition, the radio network controller 170 maintains location information which provides information on the location of the user equipment within the wireless communications network 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates with service general packet radio service support nodes (SGSNs) 220 and a gateway general packet radio support node (GGSN) 180. The GGSN then communicates with a packet-switch core 190 such as, for example, the Internet.

As shown in more detail in Figure 2, there are provided small cell base stations, in this example femto cell base stations F_{A} to Fc, each of which provides a femto cell A to C in the vicinity of a building within which the associated femto cell base station is installed. The femto cells A to C provide local communications coverage for a user in the vicinity of those buildings. Each femto cell base station FA to FC communicates via a femto cell controller/gateway 230. An inter-layer handover or camping event occurs between the base station 22 and the femto cell base stations F_{A} to Fc when the femto base stations F_{A} to Fc detect that user equipment comes within range. The femto cell base stations F_{A} to Fc typically utilise the user's broadband Internet connection 240 (such as ADSL, Cable, Ethernet, etc.) as a backhaul.

Femto cell base stations F_{A} to F_{C} are lower-power, low-cost, user-deployed base stations that provide a high cellular quality of service in residential or enterprise environment. In contrast to current macro cell approaches where complex and highly reliable base stations are deployed to strategic locations decided by the network owner, the femto cell base stations F_{A} to Fc are typically provided locally by customers. Such femto cell base stations F_{A} to Fc provide local coverage in areas of the macro network where quality of service may be low. Hence, the femto cell base stations F_{A} to Fc provide for improved quality of service in areas which are difficult for network operators. To reduce the cost of the femto base stations F_{A} to F_{C} and to reduce complexity and interference effects of the femto cell on other user equipment within the macro cell, the transmission power of the femto cell base station F_{A} to F_{C} is relatively low in order to restrict the size of the femto cell to a range of tens of metres or less. The femto cell base stations F_{A} to F_{C} have extensive auto-configuration and self-optimisation capability to enable a simply plug-and-play deployment. As such, they are designed to automatically integrate themselves into an existing macro cellular wireless network 10.

In particular, the femto cells are normally grouped into clusters and each femto cell cluster behaves like a single RNC when communicating with the SGSN 220 in an existing packet switch core network or when communication with the MSC 250 in an existing circuit switched core network. However, given that the RNC functionality is geographically dispersed across a large number of network elements, it is necessary to deploy a femto cell controller/gateway 230 for each cluster of femto cells. This femto cell controller/gateway 230 terminates the signalling interfaces between the traditional core network elements and the femto cell cluster, thereby creating the notion of a single virtual RNC. This virtual RNC represents the femto cell cluster as a whole. The femto cell controller/gateway 230 supports a number of procedures that are implemented on the femtos themselves.

### Example Femto Deployment

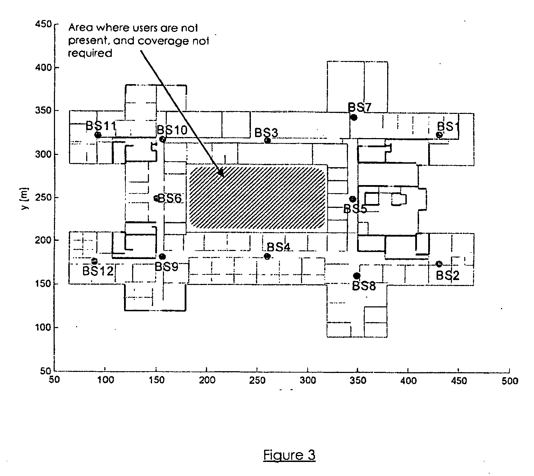

Figure 3 illustrates an example environment of a group of small cell base stations within a building. In this example, the small cell base stations are femto base stations. Femto base station BS5 is located at an entrance to the building, the other femto base stations are distributed throughout the building. The overlying macro base station is not shown.

### Coverage Gap Identification

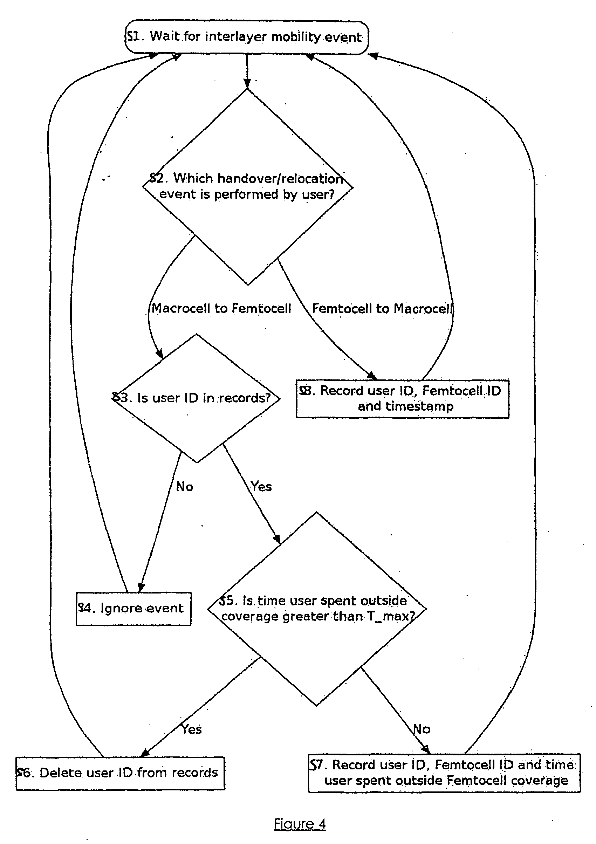

Figure 4 illustrates a flowchart showing the main processing steps performed to gather information to help identify the presence of coverage gaps. In this example, a central control server is provided at, for example, the femto cell controller/gateway 230 which communicates with all the femto base stations in the femto group with which it wishes to perform coverage optimization.

### New user - Entering femto base station group

Assuming now that new user equipment enters the coverage area of the femto base station group. At step S 1, an inter-layer mobility event is awaited. As the user equipment is handed over to femto base station BS5, it is determined at step S2 that a macro cell to femto cell inter-layer handover has occurred. Because the user equipment is new to the femto base station group, it is determined at step S3 that the ID of the user equipment is not in the current records. Accordingly, at step S4, the macro cell to femto cell mobility event is ignored and processing then returns to step Sl.

### New user- Exiting femto base station group

Assuming now that new user equipment exits the coverage area of the femto base station group. At step S1, and inter-layer mobility event is awaited. At step S2, it is determined what type of event has been performed by the user equipment. In this example, the new user equipment exits the coverage area provided by the group of femto base stations and hands over to the macro cell.

Accordingly, at step S8, the user ID (such as the user equipment IMSI, ITSI or other identifier) is recorded, together with the ID of the femto cell which handed off the user equipment to the macro cell and a time stamp. Processing then returns to step S1.

### Known User - Re-entry into femto base station group

Assuming now that user equipment which has previously exited the femto base station group re-enters the femto base station group. At step S1, an inter-layer mobility event is awaited. At step S2, the type of mobility event is determined. In this example, a macro cell to femto cell handover is being performed. Accordingly, at step S3, a determination is made of whether the user is identified in the records. In this example, the user equipment is identified in the records because it has previously exited the small cell base station group.

At step S5, a determination is made of whether the time spent outside the femto base station group is greater than a predetermined amount T_max. This can be determined by looking at the current time and comparing this against the time recorded previously at step S8.

If the time elapsed is less than T_max, then this indicates that the user equipment has experienced a coverage gap which caused the user equipment to relocate temporarily to the overlying macro cell and then relocate back to the femto base station group. Accordingly, at step S7, the ID of the femto cell which was handed to by the macro cell is recorded, together with the time period spent outside the femto base station group. It will be appreciated that rather than recording the elapsed time, it would instead be possible to simply record a further timestamp indicating the time that the macro cell to femto cell handover occurred.

If it is determined that the time spent outside the coverage area of the small cell base station group is greater than T_max, then this probably indicates that the user equipment is unlikely to have experienced a coverage gap but may instead have intentionally left the coverage area of the femto base station group. Accordingly, at step S6 the partial record entered previously for that user equipment at step S8 is deleted.

It is possible to use this deleted information to help identify so-called "guard" femto base stations which may be located at the entrances and/or exits of buildings. It is likely that such guard femto base stations will experience a high number of inter-layer mobility events due to user equipment leaving the vicinity of the group of femto base stations often. Providing an indication of the likely guard femto base stations to the coverage optimizer will help prevent the coverage optimizer from attempting to unnecessarily increase the coverage area of guard femto base stations.

Also, by identifying likely guard femto base stations, it is possible to ensure that the handover bias for those guard femto base stations is less "sticky" than for the other femto base stations. That is to say that the threshold at which handover occurs may be set to be lower for guard femto base stations than for other more "sticky" femto base stations. This bias helps to ensure that user equipment is less likely to be handed off to an overlying macro cell by the other femto base stations than by the guard femto base station.

Hence, it can be seen that for an inter-layer mobility event where a user hands over/relocates from a macro cell into the femto cell group, the control server checks at step S3 if the user is in the list. If the user is not in the list of previous users, then at step S4 the mobility event is not recorded. If the user is in the list, the time the user has spent outside the femto cell group is checked at step S5. If the period of time is longer than a set value T_max, then the mobility event is judged to have been caused by the user leaving the femto cell group (for example, leaving the office building) and not due to a coverage gap. The user is removed from the list at step S6 and the mobility event is not recorded. If the period is shorter than T_max, then the mobility event is recorded at step 7, with the ID of the femto cell involved with the mobility event, and the period of time that the user spent outside the femto cell group. When a user hands over/relocates from the femto cell group into a macrocell, the control server records the ID of the femto cell and user involved, and the time in which this event occurs at step S8.

### Coverage Gap Event Information

Table 1 illustrates example information obtained from the process described above with reference to Figure 3.

**Table 1**

| User ID | Exit Femto cell ID | Entry Femto cell ID | Time period spent outside (seconds) |
|---|---|---|---|
| UE_{A} | BS10 | BS3 | 8.45 |
| UE_{B} | BS3 | BS10 | 5.03 |
| UE_{C} | BS8 | BS5 | 0.32 |
| UE_{C} | BS5 | BS8 | 0.56 |
| UE_{A} | BS4 | BS4 | 3654.01 |
| UE_{B} | BS4 | BS4 | 5645.21 |
| UE_{A} | BS5 | BS5 | 28 800 |
| UE_{B} | BS5 | BS5 | 30 123 |
| UE_{C} | BS5 | BS5 | 27 564 |
| UE_{X} | BS5 | BS5 | 44 126 |
| ... | ... | ... | ... |

The information from the table may be provided to a coverage optimization algorithm that utilizes it to adjust the coverage of the femto base stations accordingly. As can be seen from Table 1, there is a coverage gap between femto cells 10 and 3 and this is likely to be due to a coverage gap existing in an area of high mobility [for example, a corridor] because the time period spent outside the femto base station group is short.

It can also be see that there is a coverage gap between femtocells 8 and 5 and the coverage gap may be small causing a ping-pong effect where handovers occur in rapid succession between the two base stations. The time period spent outside the coverage area helps to guide how much the coverage should be increased since overcompensating the coverage area can cause higher leakage, interference and increase the load in a femto cell which is undesirable.

The table also indicates that there is a coverage gap in important areas where the users are static for long periods of time (for example, the user is located within a cubicle). The table also indicates that femto cell 5 may be a guard base station since many user equipment spend extended periods of time outside the coverage area.

The information may therefore be used to identify and obtain information on the existence of coverage holes within the small cell base station group. This information can then be used by many different multi-objective coverage optimization algorithms to achieve different effects.

It will be appreciated that there are many different variations in which this technique can be implemented, for example the information can be collected in a distributed manner by the femto base stations themselves. Also, there could be a timer that deletes recorded user IDs from the list of users once the user has left the femto cell group for longer than T_max.

This approach provides a means of detecting and categorizing coverage gaps within a small cell group. It is computationally light, and does not rely on extensive measurement and processing of radio signals. This is an important feature that allows small cell products to perform more sophisticated coverage auto-configuration features, where better decisions can be made to balance the multiple objectives involved with coverage optimization.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of identifying coverage gaps between small cells (A; B; C) of a group of small cells supported by a group of small cell base stations (F_{A}- Fc; BS1 - BS11) within an overlying cell (24) supported by a base station (22) of a wireless telecommunications network (10), **characterised by**:
identifying at least one coverage gap event identifying a coverage gap between said small cells of said group of small cells supported by said group of small cell base stations within said overlying cell supported by said base station based on a time elapsed between inter-layer mobility events of user equipment between said group of small cells and said overlying cell.

2. The method of claim 1, wherein said identifying comprises identifying each coverage gap event by measuring (S5) said time elapsed between an exit inter-layer mobility event of said user equipment between an exit small cell of said group of small cells and said overlying cell and an entry inter-layer mobility event of user equipment between said overlying cell and an entry small cell of said group of small cells.

3. The method of claim 1 or 2, comprising associating an indication of said time elapsed with said coverage gap event.

4. The method of claim 2 or 3, comprising associating with said coverage gap event an indication of at least one of an entry small cell base station supporting said entry small cell and an indication of an exit small cell base station supporting said exit small cell.

5. The method of any preceding claim, comprising collating coverage gap events into a set of said coverage gap events.

6. The method of claim 5, comprising disregarding (S6) from said set of said coverage gap events those coverage gap events having greater than a predetermined time elapsed.

7. The method of any preceding claim, wherein said predetermined time elapsed is a statistical function of said time elapsed associated with each coverage gap event.

8. The method of any one of claims 5 to 7, comprising disregarding from said set of coverage gap events those coverage gap events for which said indication of said entry small cell base station matches said indication of said exit small cell base station.

9. The method of any one of claims 6 to 8, comprising collating disregarded coverage gap events into a set of disregarded coverage gap events.

10. The method of claim 9, comprising identifying those small cell base stations identified most often in said set of disregarded coverage gap events as being guard small cell base stations of said group of small cell base stations.

11. The method of claim 10, comprising providing an indication of said guard small cell base stations to a coverage gap optimiser.

12. The method of any preceding claim, comprising providing an indication of a coverage gap between two small cells to a coverage gap optimiser based on a statistical function of said time elapsed associated with each coverage gap event between said two small cells.

13. A computer program product operable, when executed on a computer, to perform the method of any preceding claim.

14. A network node (230) operable to identify coverage gaps between small cells of a group of small cells supported by a group of small cell base stations (F_{A} - F_{C}; BS1 - BS 11) within an overlying cell (24) supported by a base station (22) of a wireless telecommunications network (10), said network node **characterised by**:
identifying logic operable to identify at least one coverage gap event identifying a coverage gap between said small cells of said group of small cells supported by said group of small cell base stations within said overlying cell supported by said base station based on a time elapsed between inter-layer mobility events of user equipment between said group of small cells and said overlying cell.

## Patentansprüche

1. Verfahren zur Identifizierung von Abdeckungslücken zwischen kleinen Zellen (A; B; C) einer Gruppe von von einer Gruppe kleinzelliger Basisstationen (F_{A} - F_{C}; BS1 - BS11) unterstützten kleinen Zellen innerhalb einer von einer Basisstation (22) eines drahtlosen Telekommunikationsnetzwerks (10) unterstützten überlagernden Zelle (24), **gekennzeichnet durch**:
Identifizieren zumindest eines Abdeckungslückenereignisses, welches eine Abdeckungslücke zwischen den besagten kleinen Zellen der besagten Gruppe von von der besagten Gruppe kleinzelliger Basisstationen unterstützten kleinen Zellen innerhalb der besagten von der besagten Basisstation unterstützten überlagernden Zelle auf der Basis eines zeitlichen Abstands zwischen Inter-Layer-Mobilitätsereignissen eines Teilnehmergeräts zwischen der besagten Gruppe von kleinen Zellen und der besagten überlagernden Zelle identifiziert.

2. Verfahren nach Anspruch 1, wobei das besagte Identifizieren das Identifizieren eines jeden Abdeckungslückenereignisses durch Messen (S5) des besagten zeitlichen Abstands zwischen einem Austritts-Inter-Layer-Mobilitätsereignis des besagten Teilnehmergeräts zwischen einer kleinen Austrittszelle der besagten Gruppe von kleinen Zellen und der besagten überlagernden Zelle und einem Eintritts-Inter-Layer-Mobilitätsereignis des Teilnehmergeräts zwischen der besagten überlagernden Zelle und einer kleinen Eintrittszelle der besagten Gruppe von kleinen Zellen.

3. Verfahren nach Anspruch 1 oder 2, umfassend das Assoziieren einer Angabe des besagten zeitlichen Abstands mit dem besagten Abdeckungslückenereignis.

4. Verfahren nach Anspruch 2 oder 3, umfassend das Assoziieren einer Angabe mindestens entweder einer die besagte kleine Eintrittszelle unterstützenden kleinzelligen Eintritts-Basisstation oder einer Angabe einer die besagte kleine Austrittszelle unterstützenden kleinzelligen Austritts-Basisstation mit dem besagten Abdeckungslückenereignis.

5. Verfahren nach einem beliebigen der vorstehenden Ansprüche, umfassend das Zusammentragen von Abdeckungslückenereignissen in einen Satz der besagten Abdeckungslückenereignisse.

6. Verfahren nach Anspruch 5, umfassend das Nichtberücksichtigen (S6) derjenigen Abdeckungslückenereignisse, deren zeitlicher Abstand einen vorbestimmten Wert überschreitet, in dem besagten Satz der besagten Abdeckungslückenereignisse.

7. Verfahren nach einem beliebigen der vorstehenden Ansprüche, wobei der besagte vorbestimmte zeitliche Abstand eine Statistikfunktion des besagten mit jedem Abdeckungslückenereignis assoziierten zeitlichen Abstands ist.

8. Verfahren nach einem beliebigen der Ansprüche 5 bis 7, umfassend das Nichtberücksichtigen derjenigen Abdeckungslückenereignisse, für welche die besagte Angabe der besagten kleinzelligen Eintritts-Basisstation mit der besagten Angabe der besagten kleinzelligen Austritts-Basisstation übereinstimmt, in dem besagten Satz von Abdeckungslückenereignissen.

9. Verfahren nach einem beliebigen der Ansprüche 6 bis 8, umfassend das Zusammentragen von nicht berücksichtigten Abdeckungslückenereignissen in einen Satz von nicht berücksichtigten Abdeckungslückenereignissen.

10. Verfahren nach Anspruch 9, umfassend das Identifizieren derjenigen kleinzelligen Basisstationen, die am öftesten in dem besagten Satz von nicht berücksichtigten Abdeckungslückenereignissen identifiziert werden, als kleinzellige Schutz-Basistationen der besagten Gruppe kleinzelliger Basisstationen.

11. Verfahren nach Anspruch 10, umfassend das Bereitstellen einer Angabe der besagten kleinzelligen Schutz-Basisstationen an einen Abdeckungslücken-Optimierer.

12. Verfahren nach einem beliebigen der vorstehenden Ansprüche, umfassend das Bereitstellen einer Angabe einer Abdeckungslücke zwischen zwei kleinen Zellen an einen Abdeckungslücken-Optimierer auf der Basis einer Statistikfunktion des besagten mit jedem Abdeckungslückenereignis zwischen den besagten zwei kleinen Zellen assoziierten zeitlichen Abstands.

13. Computerprogramm-Produkt, betreibbar, um bei dessen Ausführung auf einem Computer das Verfahren eines beliebigen der vorstehenden Ansprüche durchzuführen.

14. Netzwerkknoten (230), betreibbar, um Abdeckungslücken zwischen kleinen Zellen einer Gruppe von von einer Gruppe kleinzelliger Basisstationen (F_{A} - F_{C}; BS1 - BS11) unterstützten kleinen Zellen innerhalb einer von einer Basisstation (22) eines drahtlosen Telekommunikationsnetzwerks (10) unterstützten überlagernden Zelle (24) zu identifizieren, wobei der besagte Netzwerkknoten **gekennzeichnet ist durch**:
Identifikationslogik, betreibbar für das Identifizieren zumindest eines Abdeckungslückenereignisses, welches eine Abdeckungslücke zwischen den besagten kleinen Zellen der besagten Gruppe von von der besagten Gruppe kleinzelliger Basisstationen unterstützten kleinen Zellen innerhalb der besagten von der besagten Basisstation unterstützten überlagernden Zelle auf der Basis eines zeitlichen Abstands zwischen Inter-Layer-Mobilitätsereignissen eines Teilnehmergeräts zwischen der besagten Gruppe von kleinen Zellen und der besagten überlagernden Zelle identifiziert.

## Revendications

1. Procédé d'identification de lacunes de couverture entre des petites cellules (A ; B ; C) d'un groupe de petites cellules prises en charge par un groupe de stations de base de petites cellules (F_{A} à F_{C} ; BS1 à BS11) à l'intérieur d'une cellule supérieure (24) prise en charge par une station de base (22) d'un réseau de télécommunication sans fil (10), **caractérisé par** l'étape suivante :
identifier au moins un événement de lacune de couverture identifiant une lacune de couverture entre lesdites petites cellules dudit groupe de petites cellules prises en charge par ledit groupe de stations de base de petites cellules à l'intérieur de ladite cellule supérieure prise en charge par ladite station de base en fonction d'un temps écoulé entre des évènements de mobilité intercouche d'un équipement utilisateur entre ledit groupe de petites cellules et ladite cellule supérieure.

2. Procédé selon la revendication 1, dans lequel ladite identification comprend l'identification de chaque événement de lacune de couverture en mesurant (55) ledit temps écoulé entre un événement de mobilité intercouche de sortie dudit équipement utilisateur entre une petite cellule de sortie dudit groupe de petites cellules et ladite cellule supérieure et un événement de mobilité intercouche d'entrée d'un équipement utilisateur entre ladite cellule supérieure et une petite cellule d'entrée dudit groupe de petites cellules.

3. Procédé selon la revendication 1 ou 2, comprenant l'association d'une indication dudit temps écoulé avec ledit événement de lacune de couverture.

4. Procédé selon la revendication 2 ou 3, comprenant l'association avec ledit évènement de lacune de couverture d'une indication d'au moins une parmi une station de base de petite cellule d'entrée prenant en charge ladite petite cellule d'entrée et d'une indication d'une station de base de petite cellule de sortie prenant en charge ladite petite cellule de sortie.

5. Procédé selon l'une quelconque des revendications précédentes, comprenant la réunion d'évènements de lacunes de couverture dans un ensemble desdits évènements de lacunes de couverture.

6. Procédé selon la revendication 5, consistant à ignorer (S6), parmi ledit ensemble desdits évènements de lacunes de couverture, les évènements de lacunes de couverture ayant plus d'un temps prédéterminé écoulé.

7. Procédé selon l'une quelconque des revendications précédentes, dans lequel ledit temps prédéterminé écoulé est une fonction statistique dudit temps écoulé associé à chaque évènement de lacune de couverture.

8. Procédé selon l'une quelconque des revendications 5 à 7, consistant à ignorer, parmi ledit ensemble d'évènements de lacunes de couverture, les évènements de lacunes de couverture pour lesquels ladite indication de ladite station de base de petite cellule d'entrée correspond à ladite indication de ladite station de base de petite cellule de sortie.

9. Procédé selon l'une quelconque des revendications 6 à 8, comprenant la réunion d'évènements de lacunes de couverture ignorés en un ensemble d'évènements de lacunes de couverture ignorés.

10. Procédé selon la revendication 9, comprenant l'identification de ces stations de base de petites cellules identifiées le plus souvent dans ledit ensemble d'évènements de lacunes de couverture ignorés comme étant des stations de base de petites cellules de veille dudit groupe de stations de base de petites cellules.

11. Procédé selon la revendication 10, comprenant la fourniture d'une indication desdites stations de base de petites cellules de veille à un optimiseur de lacune de couverture.

12. Procédé selon l'une quelconque des revendications précédentes, comprenant la fourniture d'une indication d'une lacune de couverture entre deux petites cellules à un optimiseur de lacune de couverture sur la base d'une fonction statistique dudit temps écoulé associé à chaque événement de lacune de couverture entre lesdites deux petites cellules.

13. Produit de programme informatique permettant, lorsqu'il est exécuté sur un ordinateur, de réaliser le procédé selon l'une quelconque des revendications précédentes.

14. Noeud de réseau (230) permettant d'identifier des lacunes de couverture entre des petites cellules d'un groupe de petites cellules prises en charge par un groupe de stations de base de petites cellules (F_{A} à F_{C} ; BS1 à BS11) à l'intérieur d'une cellule supérieure (24) prise en charge par une station de base (22) d'un réseau de télécommunication sans fil (10), ledit noeud de réseau étant **caractérisé par** :
une logique d'identification permettant d'identifier au moins un événement de lacune de couverture identifiant une lacune de couverture entre lesdites petites cellules dudit groupe de petites cellules prises en charge par ledit groupe de stations de base de petites cellules à l'intérieur de ladite cellule supérieure prise en charge par ladite station de base en fonction d'un temps écoulé entre des évènements de mobilité intercouche d'un équipement utilisateur entre ledit groupe de petites cellules et ladite cellule supérieure.
